# EUROPEAN PATENT APPLICATION

(11) **EP 1 645 857 A1**
(43) Date of publication of application: **12.04.2006**
(21) Application number: 04104888.5
(22) Date of filing: 06.10.2004
(51) Int. Cl.: G01K 7/22

(54) **Sensor device for domestic appliances**

(71) Applicant: WHIRLPOOL CORPORATION, Benton Harbor Michigan 49022 (US)
(72) Inventor: Becker, Christian, 21025, Comerio (IT); Baltes, Reinhold, 21025, Comerio (IT); Prowald, Thomas, 21025, Comerio (IT); Jung, Clemens, 21025, Comerio (IT)
(74) Representative: Guerci, Alessandro

(57) **Abstract**

A sensor device (10) for domestic appliances, particularly for washing, drying and dishwashing machines, has a hollow body with a sensing element (18) and means (12) for fixing the sensor device to the domestic appliance. The body is a single piece of polymeric material and presents a first elongated portion (10a) adapted to be in contact with a fluid to be sensed, a central portion (10c) having fixing and sealing means (12, 14) and a third portion (10b) having a seat (S) for a connector.

## Description

The present invention relates to a sensor device for domestic appliances, particularly for washing, drying and dishwashing machines, having a body provided with a sensing element and means for fixing the sensor device to the domestic appliance.

It is well known the use of sensors in washing appliances (washers, dryers and dishwashers) which must provide the electronic unit of the appliance with data on the actual parameters of a fluid (air or liquid medium) used by the appliance (temperature, conductivity, turbidity etc.). The use of such sensors allows having a more efficient appliance in term of energy saving and reduced consumption of water. Of course such sensors do increase the overall cost of the appliance. Therefore it is important in the field of domestic appliances to have a sensor with high quality and low cost.

This is the main object of the present invention, i.e. to provide a sensor device which is cheaper and have a higher quality if compared to the present devices, both in term of reduced number of components and easiness of installation into the appliance.

According to the invention, such object is obtained thanks to the features listed in the appended claims.

One of the important features of the sensor device according to the invention is that the body of the device, usually made of polymeric material and having a portion which is in contact with the fluid to be sensed, contains a PCB (Printed Circuit Board) which carries the actual sensing element and presents at least a track adapted to cooperate with a connector.

Thanks to the above features, the sensor device is made of very few pieces, i.e. a body, a PCB and a sensing element directly mounted on such component. The plastic body has the function of electric insulation, fixation of the sensor, water protection and connector frame (with connector coding and fixation). There is no need of using wires, with related problems of electrical connection to the sensing element and to the connector. The direct installation of the sensor element on the plate/layer component (for instance a printed circuit board) is very quick and reliable (it is a standard process that can be easily automated, giving high quality results). The connector coding and fixation frame (for plug insertion) is integral with the sensor body itself.

Other features and advantages according to the present invention will be clear from the following description, provided as an example, with reference to the attached drawings in which:
- figure 1 is a side view (partially sectioned) of the sensor device according to the invention;
- figure 2 is a top view of the sensor device according to figure 1; and
- figure 3 is view of a component of the sensor device of figure 1.

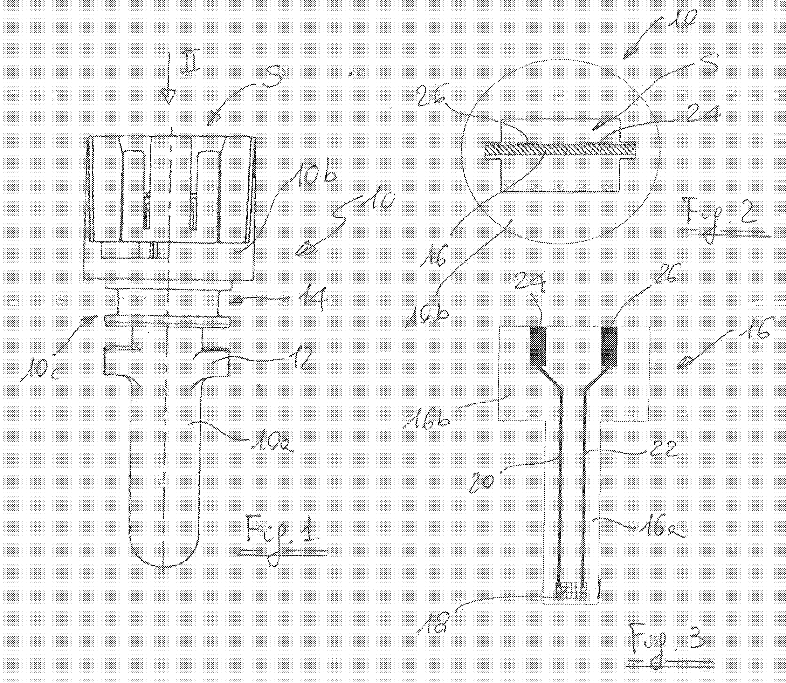

With reference to the drawings, with 10 is indicated a sensor device to be installed in a dishwashing machine (not shown) in order to detect temperature of the washing liquor inside the machine.

The sensor 10 comprises a cylindrical hollow body of polymeric material having a finger portion 10a adapted to be in contact with the washing liquor and a contact portion 10b adapted to be connected to the circuit of the machine. The finger portion 10a presents two side wings 12 adapted to cooperate with a corresponding seat (not shown) of the machine for a bayonet-type fitting. Between the finger portion 10a and the contact portion 10b, the body 10 presents a central zone 10c having an annular groove 14 for receiving a O-ring gasket (not shown) used for a water-tight installation of the sensor device 10 in a corresponding aperture in the tub or water circuit of the dishwashing or washing machine.

Inside the hollow body of the sensor 10 a T-shaped printed circuit board (PCB) 16 is placed, having a narrow portion 16a inserted in the finger portion 10a of the sensor and an enlarged portion 16b inserted in the contact portion 10b of the hollow body and protruding centrally from such portion. On the end of the narrow portion 16a of the printed circuit board 16, a NTC (Negative Temperature Coefficient) pellet 18 is soldered as a e.g. SMD (Surface Mount Device) component. On the printed circuit board 16 there are two tracks 20 and 22 which link the pellet 18 to two contacts 24 and 26 on the enlarged portion 16b of the PCB respectively. The contacts 24 and 26 are defined as enlarged and preferably thicker end portions of the track 20 and 22, and are preferably designed for RAST 2.5 connectors. The portion 16b of the PCB together with the portion 10b of the plastic body forms a seat S for a connector (not shown). Preferably the inside of the contact portion 10b of the sensor is shaped as a conventional RAST housing for a RAST header (not shown). For fixing the PCB 16 inside the body of the sensor 10, a RAST 2.5 connector is preferably used. A casting compound (for instance an epoxy resin) can be used too for fixing the PCB 16 inside the body. Such casting compound is poured into the body so that, after curing, the PCB 16 is "integral" with the body. Even if the casting material does not adhere to the plastic body, the sensor 10 is kept in its correct position since the RAST connector together with the plug (not shown) still fixes the PCB with the sensor. Such loss of "glue" effect of the casting material can be due to hot-cold cycles affecting the sensor device.

It is clear that with the technology according to the present invention the number of components of the sensor is very small, i.e. a plastic body and a PCB with a sensor mounted on it. Therefore the cost of the sensor is reduced and the reliability of the sensor is increased.

Even if the solution using RAST connectors has been disclosed, other type of connectors can be used as well without departing from the scope of the present invention.

On the printed circuit board, in addition to the sensor 18, other electronic components can be mounted, for instance an electronic circuit for elaborating the signal from the sensor 18.

## Claims

1. Sensor device (10) for domestic appliances, particularly for washing, drying and dishwashing machines, having a hollow body with a sensing element (18) and means (12) for fixing the sensor device to the domestic appliance, **characterised in that** the body is a single piece of polymeric material and presents a first elongated portion (10a) adapted to be in contact with a fluid to be sensed, a central portion (10c) having fixing and sealing means (12, 14) and a third portion (10b) having a seat (S) for a connector.

2. Sensor device according to claim 1, **characterised in that** in the body (10a, 10b) a PCB (printed circuit board) component (16) is mounted, such PCB component (16) carrying the sensing element (18) and at least one track (20, 22, 24, 26) adapted to cooperate with an electrical connector.

3. Sensor device according to claim 2, **characterised in that** the PCB component (16) is fixed by means of a RAST connector.

4. Sensor device according to claim 1, **characterised in that** the sensing element (18) is a temperature sensor.

5. Sensor device according to any of the claims 2-4, **characterised in that** the tracks (24, 26) on the PCB component (16) are adapted to cooperate with a RAST connector.

6. Sensor device according to any of claims 2-4, **characterised in that** the sensor element (18) is a NTC sensor.

7. Sensor device according to any of the preceding claims, **characterised in that** the seat (S) for the connector includes coding means.
